# EUROPEAN PATENT APPLICATION

(11) **EP 4 411 123 A1**
(43) Date of publication of application: **07.08.2024**
(21) Application number: 24155060.7
(22) Date of filing: 31.01.2024
(51) Int. Cl.: F02C 6/08, F02C 7/047

(54) **AIRCRAFT ANTI-ICING SYSTEM**

(30) Priority: 31.01.2023 IN 202311006132
(71) Applicant: Rohr, Inc., Chula Vista, CA 91910-2098 (US)
(72) Inventor: MALLAMPATI, Pratap, 560071 Bengaluru (IN)
(74) Representative: Dehns

(57) **Abstract**

An anti-icing system (60) for an aircraft nacelle structure is provided that includes a controllable PRSOV (72), a circumferentially extending duct (70), a bleed air duct segment (78A-C), at least one PRV (74), and a controller (76). The PRSOV (72) may be disposed in a closed or an open configuration. The PRV (74) is disposed downstream of the PRSOV (72) and in fluid communication with the bleed air duct segment (78A-C). The PRV (74) may be disposed in a closed or in an open configuration. The controller (76) is in communication with a memory storing instructions. The instructions when executed cause the system controller (76) to control the PRSOV (72) to maintain bleed air within the anti-icing system (60) within a predetermined range of operating pressures by selectively controlling the PRSOV (72) into at least one of the one or more PRV open configurations, and control the PRV (74) to open to maintain the bleed air below the maximum pressure.

## Description

### BACKGROUND OF THE INVENTION

### 1. Technical Field

This disclosure relates to an aircraft anti-icing systems in general, and to aircraft anti-icing systems that use bleed air in particular.

### 2. Background Information

A gas turbine engine typically includes a fan section, a compressor section, a combustor section and a turbine section. Air entering the compressor section is compressed and delivered into the combustor section where it is mixed with fuel and ignited to generate a core gas flow. The core gas flow drives the turbine section and the turbine in turn drives the compressor and the fan section. The compressor section typically includes low and high pressure compressors, and the turbine section includes low and high pressure turbines.

In one type of aircraft de-icing system, bleed air from the compressor section is provided to an aircraft structure susceptible to ice accretion, for example, aircraft wings or an engine fan nacelle inlet. The flow of hot fluid from the compressor section is regulating using a valve. Improved robustness over such a system is desired.

### SUMMARY

According to an aspect of the present disclosure, an anti-icing system for an aircraft nacelle structure utilizing bleed air from a gas turbine engine bleed air source is provided. The system includes a controllable pressure regulating and shut off valve (PRSOV), a circumferentially extending duct disposed at an inlet of the nacelle, a bleed air duct segment, at least one controllable pressure relief valve (PRV), and a controller. The PRSOV is in fluid communication with the bleed air source and is controllable to be disposed in a PRSOV closed configuration or in one or more PRSOV open configurations, including a PRSOV fully open configuration and one or more PRSOV partially open configurations. The bleed air duct segment is in fluid communication with the PRSOV and the circumferentially extending duct. The at least one controllable PRV is disposed downstream of the PRSOV and in fluid communication with the bleed air duct segment. The PRV is controllable to be disposed in a PRV closed configuration or in one or more PRV open configurations. The at least one controllable PRV includes an exhaust disposed to permit bleed air to exit the anti-icing system. The controller is in communication with the PRSOV, the PRV, and a non-transitory memory storing instructions, which instructions when executed cause the system controller to: control the PRSOV to maintain bleed air within the anti-icing system within a predetermined range of operating pressures by selectively controlling the PRSOV into at least one of the one or more PRV open configurations, the predetermined range of operating pressures including a maximum pressure; and control the PRV to one or more of the PRV open configurations to maintain the bleed air within the anti-icing system below the maximum pressure.

In any of the aspects or embodiments described above and herein, the circumferentially extending duct disposed at an inlet of the nacelle may be a D-duct.

In any of the aspects or embodiments described above and herein, the system may further include a bleed air distribution system disposed within the D-duct.

In any of the aspects or embodiments described above and herein, the bleed air distribution system may include a Piccolo tube.

In any of the aspects or embodiments described above and herein, the bleed air distribution system may include one or more nozzles disposed within the D-duct configured to direct bleed air in a circumferential direction within the D-duct.

In any of the aspects or embodiments described above and herein, the at least one PRV may be in communication with a single port extending off the bleed air duct.

In any of the aspects or embodiments described above and herein, the at least one PRV may be in communication with a plurality of ports extending off the bleed air duct.

According to another aspect of the present disclosure, a method of de-icing an aircraft nacelle inlet is provided. The method includes: producing bleed air from a bleed air source associated with a gas turbine engine; using a pressure regulating and shut off valve (PRSOV) to control a bleed air pressure within an anti-icing system within a predetermined operating range of bleed air pressures, the predetermined operating range of bleed air pressures including a maximum said bleed air pressure; and using a pressure relief valve (PRV) disposed downstream of the PRSOV to maintain the bleed air within the anti-icing system below the maximum bleed air pressure.

In any of the aspects or embodiments described above and herein, the anti-icing system may include a circumferentially extending duct disposed at the nacelle inlet, and the PRV may be in fluid communication with a bleed air duct segment that is in fluid communication with the PRSOV and the circumferentially extending duct disposed at the nacelle inlet.

In any of the aspects or embodiments described above and herein, the step of using the PRV to maintain the bleed air within the anti-icing system below the maximum bleed air pressure may include controlling the PRV to change from a PRV closed configuration to a PRV open configuration, and in the PRV open configuration bleed air may pass through the PRV and exit the anti-icing system.

In any of the aspects or embodiments described above and herein, the step of using the PRV to maintain the bleed air within the anti-icing system below the maximum bleed air pressure may include controlling the PRV to change from a first PRV open configuration to a second PRV open configuration, and in the first PRV open configuration and in the second PRV open configuration bleed air may pass through the PRV and exit the anti-icing system.

In any of the aspects or embodiments described above and herein, the step of using the PRV to maintain the bleed air within the anti-icing system below the maximum bleed air pressure may include controlling the PRV to change from a first PRV configuration to a second PRV configuration to adjust an amount of bleed air exiting the anti-icing system.

In any of the aspects or embodiments described above and herein, the step of using the PRV to maintain the bleed air within the anti-icing system below the maximum bleed air pressure may include controlling the PRV to cause bleed air pressure within the anti-icing system to be within the predetermined operating range of bleed air pressures.

In any of the aspects or embodiments described above and herein, the anti-icing system may include a circumferentially extending duct disposed at an inlet of the nacelle, and the circumferentially extending duct may include an interior cavity, and the anti-icing system may be configured to provide bleed air to the interior cavity.

In any of the aspects or embodiments described above and herein, the anti-icing system may include a sensor configured to produce signals representative of the bleed air pressure within the anti-icing system, and the PRV may be controlled to cause the bleed air pressure within the anti-icing system to be within the predetermined range of operating pressures.

In any of the aspects or embodiments described above and herein, the sensor may be configured to sense the bleed air pressure within the interior cavity of the circumferentially extending duct disposed at an inlet of the nacelle, and the PRV may be controlled using the signals representative of the bleed air pressure to cause the bleed air pressure within the interior cavity of the circumferentially extending duct to be within the predetermined operating range of bleed air pressures.

In any of the aspects or embodiments described above and herein, the at least one PRV may be in communication with a single port extending off a bleed air duct in fluid communication with the PRSOV.

In any of the aspects or embodiments described above and herein, the at least one PRV may be in communication with a plurality of ports extending off a bleed air duct in fluid communication with the PRSOV.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic illustration of a gas turbine engine embodiment.
FIG. 2 is a diagrammatic illustration of a gas turbine engine embodiment with an anti-icing system.
FIG. 3 is a diagrammatic illustration of the forward end of a nacelle with a portion of an anti-icing system.
FIG. 4 is a diagrammatic illustration of a nacelle forward end with a lip skin and a distribution system embodiment.
FIG. 5 is a diagrammatic illustration of a nacelle forward end with a lip skin and a distribution system embodiment.
FIG. 6 is a flow chart of a present disclosure anti-icing system.
FIG. 7 is a diagrammatic representation of a pressure relief valve embodiment of the present disclosure anti-icing system.
FIG. 8 is a diagrammatic representation of a pressure relief valve embodiment of the present disclosure anti-icing system.

The embodiments, examples and alternatives of the preceding paragraphs, the claims, or the following description and drawings, including any of their various aspects or respective individual features, may be taken independently or in any combination. Features described in connection with one embodiment are applicable to all embodiments unless such features are incompatible.

### DETAILED DESCRIPTION

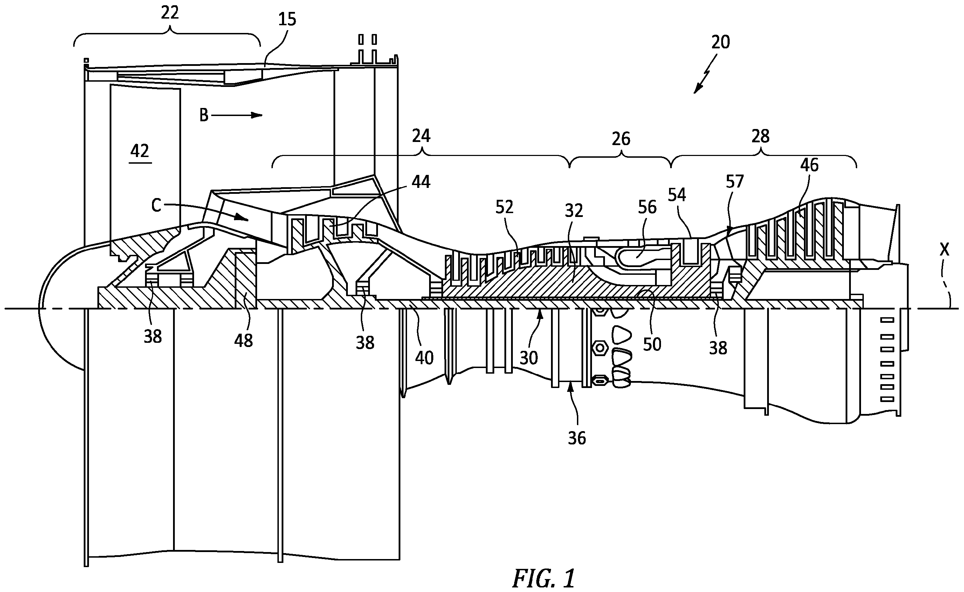

FIG. 1 diagrammatically illustrates a gas turbine engine 20. The gas turbine engine 20 is disclosed herein as a two-spool turbofan that generally incorporates a fan section 22, a compressor section 24, a combustor section 26 and a turbine section 28. Alternative engines may include additional systems or features and may not include a gear reduction in the fan. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in this non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor (LPC) 44 and a low pressure turbine (LPT) 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor (HPC) 52 and a high pressure turbine (HPT) 54. A combustor 56 is arranged in exemplary gas turbine 20 between the HPC 52 and the HPT 54. A mid-turbine frame 57 of the engine static structure 36 is arranged generally between the HPT 54 and the LPT 46. The mid-turbine frame 57 further supports bearing systems 38 in the turbine section 28. The inner shaft 40 and the outer shaft 50 are concentric and rotate via bearing systems 38 about the engine central longitudinal axis X which is collinear with their longitudinal axes.

The core airflow is compressed by the LPC 44 then the HPC 52, mixed and burned with fuel in the combustor 56, then expanded over the HPT 54 and LPT 46. The mid-turbine frame 57 includes airfoils which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48. In some embodiments the engine 20 may be a high-bypass geared aircraft engine.

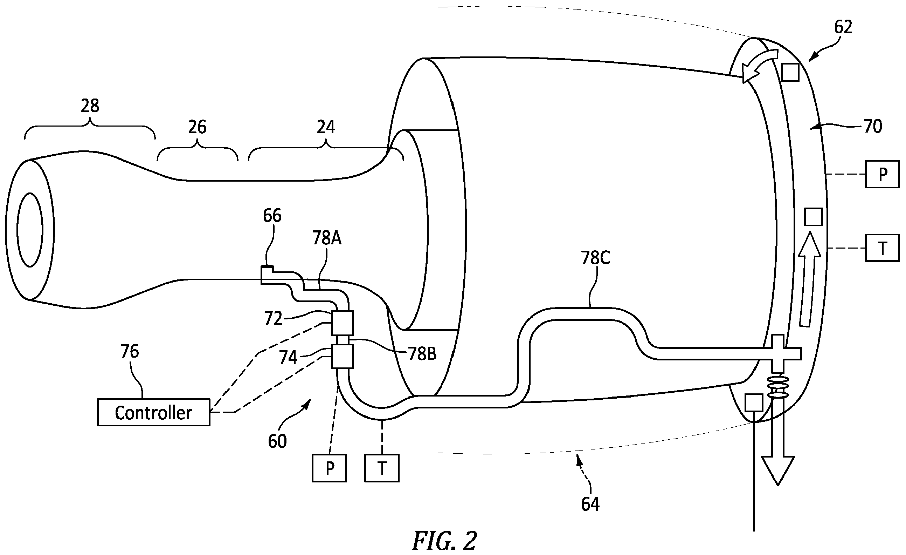

An example anti-icing system 60 is diagrammatically illustrated in FIG. 2 in a nacelle inlet 62 application. Although the anti-icing system 60 is described herein in a gas turbine engine fan nacelle 64 application, the system 60 may be used alternatively to de-ice other aircraft structures, such as an aircraft wing. The system 60 includes at least one bleed source supply 66, a circumferentially extending duct disposed at the nacelle inlet 62 (e.g., a "D-duct 70"), a pressure regulating and shut off valve ("PRSOV 72"), at least one pressure relief valve ("PRV 74"), and a controller 76 in communication with one or more of these components. As will be described herein, the system 60 further includes a plurality of duct segments 78A-C fluidly connecting the system components. In some embodiments, the system 60 may include one or more pressure sensors (P), temperature sensors (T), flow restrictors, bleed valves, check valves, and any combination thereof.

The bleed source supply 66 is configured to provide bleed gas at an elevated pressure and temperature from a compressor section 24 stage (e.g., a stage within the HPC 52), or from a turbine section 28 stage (e.g., a stage within the LPT 44), or any combination thereof for use within the anti-icing system 60. It should be noted that air bled from a compressor stage will consist of ambient air drawn into the gas turbine engine and worked to an elevated pressure and temperature within one or more compressor stages. "Air" bled from a turbine stage (downstream of the combustor section 26) will include ambient air worked within the compressor section 24 as well as combustion products produced by combustion within the combustor section. Hence, the term "bleed air" or "bled air" may not be strictly limited to ambient air.

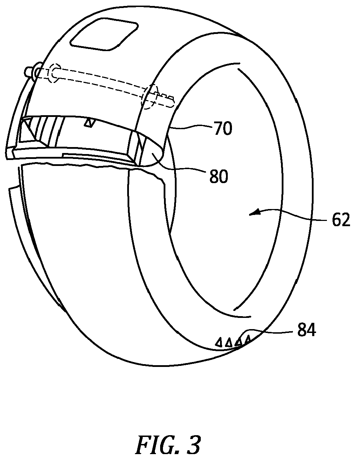

Referring to FIGS. 3-5, the present disclosure system 60 is described herein in terms of an engine nacelle anti-icing configuration that includes a circumferentially extending duct 70 disposed at the inlet 62 of a nacelle 64. The inlet 62 of a nacelle 64 is defined by one or more panels that define an air passage into the gas turbine engine. The terms "forward", "leading", "aft, "trailing" are used herein to indicate the relative position of a component or surface relative to core gas flow or ambient air during flight. Core gas flow passing through the engine will encounter a "forward" end or "leading" edge of a component before it encounters an "aft" end or "trailing" edge of the component. The inlet 62 of a nacelle 64 is disposed at a forward or leading edge and therefore encounters ambient air before the remainder of the nacelle 64. The circumferentially extending duct 70 is configured as the leading edge of the nacelle 64 and may at least in part define the inlet 62 of the nacelle 64. The circumferentially extending duct 70 may have a "D" shaped configuration. To facilitate the description herein, the nacelle 64 leading edge duct will be referred to herein as a "D-duct 70". The present disclosure is not however limited to any particular nacelle leading edge duct geometry, and the leading edge duct geometry may extend around all or less then all of the nacelle inlet 62 circumference. The D-duct 70 has an interior cavity 80 configured to contain bleed air internally around at least a portion of the nacelle inlet 62 circumference.

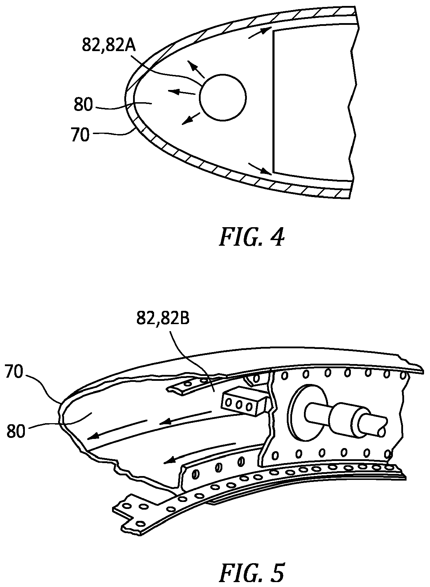

In some embodiments, the present disclosure system 60 may include a distribution system 82 within the D-duct 70 that is intended to either distribute the bleed air uniformly within the D-duct 70 or distribute bleed air to targeted regions within the D-duct 70 (e.g., areas where ice accretion occurs on an exterior surface of the D-duct 70). An example of a distribution system 82 is a Piccolo tube 82A (e.g., see FIG. 4) that is disposed within the interior cavity 80 of the D-duct 70. The Piccolo tube 82A is in fluid communication with a source of bleed air and includes a plurality of vent apertures through which bleed air may pass out of the Piccolo tube 82A and into the interior cavity 80 of the D-duct 70. Another example of a distribution system 82 is a system that includes one or more nozzles 82B that are configured to direct bleed air into the interior cavity of a D-duct 70 in a direction that produces circumferential flow within the D-duct 70 interior cavity 80; e.g., a swirl flow distribution system as diagrammatically shown in FIG. 5. In some embodiments, D-ducts 70 may include interior baffles that direct bleed air within the D-duct interior cavity (e.g., along a path that is proximate the inner surface of the D-duct 70, forward to aft within the interior cavity 80, and the like). The present disclosure does not require a D-duct 70 bleed air distribution system 82, and if one is included the present disclosure is not limited to any particular D-duct bleed air distribution system 82 configuration. The D-duct 70 may include exhaust ports 84 (e.g., see FIG. 3) that permit bleed air disposed within the D-duct 70 to escape to the exterior environment.

Referring to FIG. 2 and 6-8, a duct segment 78A provides fluid communication from the bleed source supply 66 (e.g., a compressor stage and/or a turbine stage) to the PRSOV 72. The PRSOV 72 is downstream of the bleed source supply 66. The PRSOV 72 is in communication with the controller 76 and may be selectively actuated to be in a number of different operating positions; e.g., in a fully open configuration (wherein bleed air at the maximum volumetric rate permissible for the PRSOV 72 passes through the PRSOV 72), a fully closed configuration (where no bleed air passes through the PRSOV 72), or a plurality of partially open/closed positions (where less than the maximum volumetric rate but more than zero passes through the PRSOV 72; e.g., 75%, 50%, 25%, and the like). In some embodiments, the PRSOV 72 may be configured to provide position feedback (e.g., feedback regarding the position of a valve body portion of the PRSOV 72) to facilitate control of the PRSOV 72.

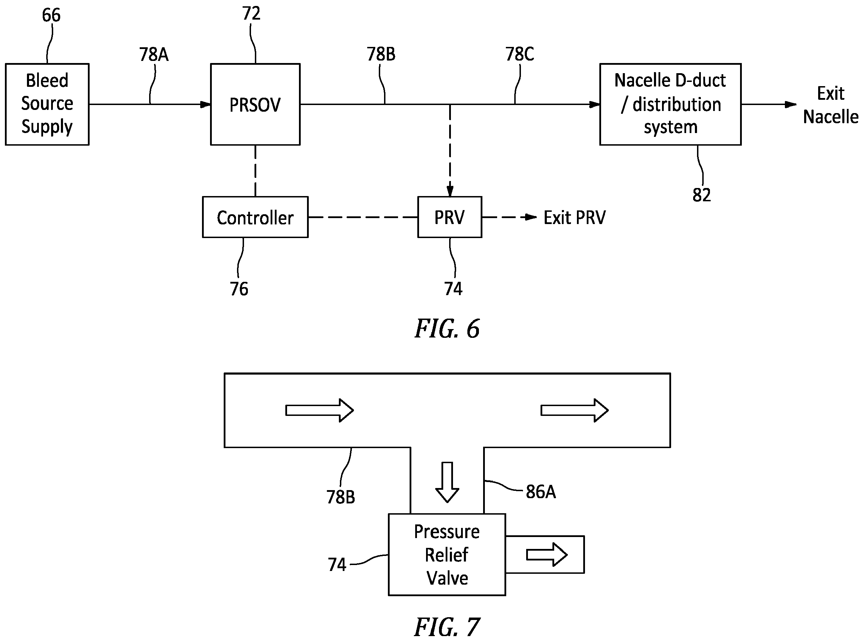

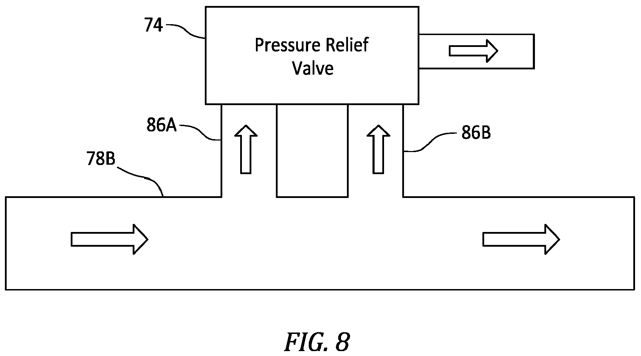

Another duct segment 78B provides fluid communication from the PRSOV 72 to a PRV 74. The PRV 74 is downstream of the PRSOV 72. The PRV 74 is configured to selectively permit a flow of bleed gas to exit the anti-icing system 60. The PRV 74 may be disposed in any arrangement that permits bleed gas to exit the anti-icing system 60; e.g., the duct segment 78B is in fluid communication with the PRV 74 through a single port 86A tapped off the duct segment 78B (e.g., FIG. 7), or the duct segment 78B may be in fluid communication with the PRV 74 through a plurality of ports 86A, 86B tapped off the duct segment 78B (e.g., FIG. 8). In some embodiments, the system may include more than one PRV 74 in fluid communication with the duct segment downstream of the PRSOV 72. Bleed gas exiting the anti-icing system 60 through the PRV 74 may be directed to other aircraft systems such as an aircraft cabin environmental system (e.g., for heating purposes), or it may be directed to a drain duct that passes the bleed air to the ambient environment, or the like, or any combination thereof. The PRV 74 is in communication with the controller 76 and may be actuated to be in a number of different operating positions; e.g., in a fully open configuration (wherein bleed air at the maximum volumetric rate permissible for the PRV 74 passes through the PRV 74), a fully closed configuration (where no bleed air passes through the PRV 74), or a plurality of partially open/closed positions (where less than the maximum volumetric rate of bleed air but more than zero passes through the PRV 74; e.g., 75%, 50%, 25%, and the like). In some embodiments, the PRV 74 may be configured to provide position feedback (e.g., feedback regarding the position of a valve body portion of the PRV 74) to facilitate control of the PRV 74.

The duct segment 78B in fluid communication with the PRV 74 is in communication with a duct segment 78C in fluid communication with the D-duct 70. In those system 60 embodiments that include a bleed air distribution system disposed within the interior cavity 80 of the D-duct 70, the duct segment 78C is in fluid communication with the distribution system 82 to provide fluid passage of bleed air into the D-duct interior cavity 80.

The controller 76 may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the system 60 to accomplish the same algorithmically and/or coordination of system components. The controller 76 includes or is in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. Communications between the controller 76 and other system components may be via a hardwire connection. A will be described herein, the controller 76 may be programmed (e.g., stored instructions) to regulate a flow of the bleed air, to the D-duct interior cavity 80 using PRSOV 72 and the PRV 74. The controller 76 may be configured with multiple channels to provide system robustness. In some embodiments, the controller 76 may be provided by a full authority digital engine control (FADEC) located within the engine.

In some embodiments, the present system 60 may include one or more pressure sensors (P) in communication with a duct segment 78A-C, or in communication with the D-duct interior cavity 80, or both. The pressure sensors are in signal communication with the controller 76.

In some embodiments, the present system 60 may include one or more temperature sensors (T) configured to sense the air temperature within a duct segment 78A-C or a component temperature related to the air temperature, produce signals representative thereof, and communicate those signals to the controller 76. One or more temperature sensors may be configured to sense the air temperature within the D-duct 80 (or a component), produce signals representative thereof, and communicate those signals to the controller 76. The controller 76 can use temperature sensor data, for example, to evaluate whether the nacelle inlet 62 is de-iced, or to evaluate system performance conditions; e.g., excessive bleed air volumetric flow, excessive bleed air temperature, and the like. The controller 76 can also use pressure sensor data, for example, to evaluate system performance conditions; e.g., excessive bleed air volumetric flow, and the like.

Governing administrative bodies such as the Federal Aviation Administration (FAA), the European Aviation Safety Agency (EASA), and others work with aircraft manufacturers to produce a Master Minimum Equipment List (MMEL) for each specific aircraft model. The MMEL provides which inoperative pieces of equipment an aircraft may have and still be airworthy. The philosophy behind MMEL and related Minimum Equipment List (MEL) is to authorize release of flight with inoperative equipment only when the inoperative equipment does not render the aircraft unairworthy for the particular flight to avoid revenue loss to the operator and discomfort to the passengers. The MMEL may be associated with special operating conditions, limitations or procedures. In some instances, the MMEL may dictate operating conditions (e.g., maximum pressures, etc.) that a system aboard the aircraft must be able to withstand during operation.

In the case of an aircraft nacelle anti-icing system 60 and as an example, a failure of a PRSOV 72 in a fully open condition or a burst duct may lead to elevated bleed air pressure within the anti-icing system 60 or elsewhere within the nacelle 64. In view thereof, the MMEL may dictate that components within the nacelle 64 anti-icing system 60 must be able to withstand an elevated air pressure associated with a component failure; e.g., a failure of a PRSOV 72 or a burst duct. To comply with the MMEL requirements, anti-icing system 60 components (e.g., system ducts 78A-C, D-duct distribution components 82 such as a Piccolo tube and its attachment hardware, seals disposed between the D-duct 70 and the mating nacelle 64 components, and other nacelle 64 components) have conventionally been designed to accommodate the elevated pressure. These additional design constraints typically result in additional component weight and cost. The present disclosure provides a solution to this issue that mitigates the additional weight and cost associated with the conventional approach.

During present disclosure system operation, the controller 76 is programmed (e.g., stored instructions) to control the PRSOV 72 to an appropriate open/closed position and regulate the bleed air flow into the anti-icing system 60 to establish normal operating condition parameters when the anti-icing system 60 is required. If a bleed air parameter such as bleed air pressure is determined to be outside of normal operating conditions within the anti-icing system 60, the controller 76 may signal the PRSOV 72 (or other system component) to adjust in response thereto. If the excessive bleed air pressure cannot be remedied by controlling the PRSOV 72 (or other system component), the controller 76 may control the PRV 74 disposed downstream of the PRSOV 72 to bleed some portion of the bleed air away from the downstream anti-icing system 60 components; e.g., bleed a sufficient amount of bleed air away so that the bleed air pressure within the downstream portion of the anti-icing system 60 is at or close to normal operating conditions. As stated above, bleed gas exiting the anti-icing system 60 through the PRV 74 may be directed to other aircraft systems such as an aircraft cabin environmental system, or a drain duct that passes the bleed air to the ambient environment, or the like, or any combination thereof.

The PRV 74 is configured to satisfy the requirements of the particular anti-icing system 60 in which it is utilized, and the anti-icing system 60 is configured for the particular aircraft application. Hence, the PRV 74 may be configured (e.g., larger or smaller maximum volumetric flow rates) to satisfy the requirements of that particular aircraft application. More specifically, the PRV 74 may be configured to bleed an amount of bleed air from the bleed air duct downstream of the PRSOV 72 to reduce the system bleed air pressure from a MMEL pressure constraint value to a bleed air pressure within normal operating conditions. In some embodiments, the PRV 74 may be in communication with a single port 86A off of the duct segment 78B extending downstream from the PRSOV 72 (e.g., see FIG. 7), or the PRV 74 may be in communication with a plurality of ports 86A, 86B off of the duct segment 78B extending downstream from the PRSOV 72 (e.g., see FIG. 8), or the present system 60 may include more than one PRV 74. In those instances wherein the PRV 74 is in communication with a plurality of ports 86A, 86B off of the duct segment 78B or the system 60 includes more than one PRV 74, the collective volumetric flow capacity of the PRV(s) 74 is adequate to bleed a sufficient amount of bleed air away so that the bleed air pressure within the downstream portion of the anti-icing system 60 is at or close to normal operating conditions.

The use of a PRV 74 downstream of the PRSOV 72 in the present disclosure anti-icing system 60 yields several benefits. For example, because excessive bleed air pressures are addressed by the PRV 74 it may no longer be necessary to configure the nacelle lip skin, forward bulkhead, aft bulkhead, bleed air ducts, D-duct distribution system hardware (e.g., Piccolo tube and associated hardware, or a swirl flow system, internal baffles, and the like), and associated seals to comply with the MMEL high-end bleed air pressure requirements. The understood concomitant weight savings and reduced cost are desirable. The present disclosure system also provides an attractive alternative to systems that utilize pulse modulation in response to an excessive bleed air pressure condition. Pulse modulation systems address excessive bleed air pressure condition by pulsing bleed air into the anti-icing system 60. Such systems may create unintended consequences like material fatigue within the anti-icing system 60 due to thermal stress. The present system also mitigates the potential for lip skin fastener compromise (e.g., failure or loosening) that may occur with excessive bleed air pressure. The present system 60 may also facilitate testing standards; e.g., it may be possible to satisfy system acceptance testing at lower normal operating pressure levels rather than at MMEL pressure levels.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. An anti-icing system (60) for an aircraft nacelle structure (64) utilizing bleed air from a gas turbine engine bleed air source (66), the system (60) comprising:
a controllable pressure regulating and shut off valve (PRSOV) (72) in fluid communication with the bleed air source (66), the PRSOV (72) controllable to be disposed in a PRSOV closed configuration or in one or more PRSOV open configurations, including a PRSOV fully open configuration and one or more PRSOV partially open configurations;
a circumferentially extending duct (70) disposed at an inlet (62) of the nacelle (64);
a bleed air duct segment (78A-C) in fluid communication with the PRSOV (72) and the circumferentially extending duct (70); and
at least one controllable pressure relief valve (PRV) (74) disposed downstream of the PRSOV (72) and in fluid communication with the bleed air duct segment (78A-C), the PRV (74) controllable to be disposed in a PRV closed configuration or in one or more PRV open configurations, including a PRV fully open configuration and one or more PRV partially open configurations, wherein the at least one controllable PRV (74) includes an exhaust disposed to permit bleed air to exit the anti-icing system (60);
a controller (76) in communication with the PRSOV (72), the PRV (74), and a non-transitory memory storing instructions, which instructions when executed cause the system controller (76) to:
control the PRSOV (72) to maintain bleed air within the anti-icing system (60) within a predetermined range of operating pressures by selectively controlling the PRSOV (72) into at least one of the one or more PRV open configurations, the predetermined range of operating pressures including a maximum pressure; and
control the PRV (74) to one or more of the PRV open configurations to maintain the bleed air within the anti-icing system (60) below the maximum pressure.

2. The system (60) of claim 1, wherein the circumferentially extending duct (70) disposed at an inlet (62) of the nacelle (64) is a D-duct.

3. The system (60) of claim 2, wherein the system (60) further includes a bleed air distribution system (82) disposed within the D-duct (70).

4. The system (60) of claim 3, wherein the bleed air distribution system (82) includes a Piccolo tube (82A).

5. The system (60) of claim 3 or 4, wherein the bleed air distribution system (82) includes one or more nozzles (82B) disposed within the D-duct (70) configured to direct bleed air in a circumferential direction within the D-duct (70).

6. The system (60) of any preceding claim, wherein:
the at least one PRV (74) is in communication with a single port (86A) extending off the bleed air duct; or
the at least one PRV (74) is in communication with a plurality of ports (86A, 86B) extending off the bleed air duct.

7. A method of de-icing an aircraft nacelle inlet (62), comprising:
producing bleed air from a bleed air source (66) associated with a gas turbine engine (20);
using a pressure regulating and shut off valve (PRSOV) (72) to control a bleed air pressure within an anti-icing system (60) within a predetermined operating range of said bleed air pressures, the predetermined operating range of said bleed air pressures including a maximum said bleed air pressure; and
using a pressure relief valve (PRV) (74) disposed downstream of the PRSOV (72) to maintain the bleed air within the anti-icing system (60) below the maximum said bleed air pressure.

8. The method of claim 7, wherein the anti-icing system (60) includes a circumferentially extending duct (70) disposed at the nacelle inlet (62); and
wherein the PRV (74) is in fluid communication with a bleed air duct segment (78A-C) that is in fluid communication with the PRSOV (72) and the circumferentially extending duct (70) disposed at the nacelle inlet (62).

9. The method of claim 7 or 8, wherein the step of using the PRV (74) to maintain the bleed air within the anti-icing system (60) below the maximum said bleed air pressure includes controlling the PRV (74) to change from a PRV closed configuration to a PRV open configuration, and in the PRV open configuration bleed air passes through the PRV (74) and exits the anti-icing system (60).

10. The method of claim 7, 8 or 9, wherein the step of using the PRV (74) to maintain the bleed air within the anti-icing system (60) below the maximum said bleed air pressure includes controlling the PRV (74) to change from a first PRV open configuration to a second PRV open configuration, and in the first PRV open configuration and in the second PRV open configuration bleed air passes through the PRV (74) and exits the anti-icing system (60).

11. The method of any of claims 7 to 10, wherein the step of using the PRV (74) to maintain the bleed air within the anti-icing system (60) below the maximum said bleed air pressure includes controlling the PRV (74) to change from a first PRV configuration to a second PRV configuration to adjust an amount of bleed air exiting the anti-icing system (60).

12. The method of any of claims 7 to 11, wherein the step of using the PRV (74) to maintain the bleed air within the anti-icing system (60) below the maximum said bleed air pressure includes controlling the PRV (74) to cause said bleed air pressure within the anti-icing system (60) to be within the predetermined operating range of said bleed air pressures.

13. The method of claim 12, wherein the anti-icing system (60) includes a circumferentially extending duct (70) disposed at an inlet (62) of the nacelle (64), the circumferentially extending duct (70) includes an interior cavity (80), and the anti-icing system (60) is configured to provide said bleed air to the interior cavity (80).

14. The method of claim 13, wherein the anti-icing system (60) includes a sensor configured to produce signals representative of the bleed air pressure within the anti-icing system (60), and the PRV (74) is controlled to cause the bleed air pressure within the anti-icing system (60) to be within the predetermined range of operating pressures,
wherein, optionally, the sensor is configured to sense the bleed air pressure within the interior cavity (80) of the circumferentially extending duct (70) disposed at an inlet (62) of the nacelle (64), and the PRV (74) is controlled using the signals representative of the bleed air pressure to cause the bleed air pressure within the interior cavity (80) of the circumferentially extending duct (70) to be within the predetermined operating range of bleed air pressures.

15. The method of any of claims 7 to 14, wherein:
the at least one PRV (74) is in communication with a single port (86A) extending off a bleed air duct in fluid communication with the PRSOV (72); or
the at least one PRV (74) is in communication with a plurality of ports (86A, 86B) extending off a bleed air duct in fluid communication with the PRSOV (72).
